# EUROPÄISCHE PATENTSCHRIFT

(11) **EP 0 335 095 B1**
(45) Veröffentlichungstag und Bekanntmachung des Hinweises auf die Patenterteilung: **27.10.1993**
(21) Anmeldenummer: 89102739.3
(22) Anmeldetag: 17.02.1989
(51) Int. Cl.: F16J 3/04, F16B 2/22, F16L 33/02

(54) **Dichtungsmanschette**
Sealing collar
Manchette d'étanchéite

(30) Priorität: 30.03.1988 DE 8804280 U
(43) Veröffentlichungstag der Anmeldung: 04.10.1989
(73) Patentinhaber: Continental Aktiengesellschaft, 30165 Hannover (DE)
(72) Erfinder: Koch, Fritz, D-3138 Dannenberg (DE); Schmittmann, Heinrich, D-3138 Dannenberg (DE); Ganswindt, Helmut, D-3138 Dannenberg (DE)

(56) Entgegenhaltungen:
- DE-A- 3 603 119
- FR-A- 2 525 729
- US-A- 4 702 483

## Beschreibung

Die Neuerung betrifft eine Dichtungsmanschette aus einem thermoplastischen Kunststoff oder aus Gummi mit einem flexiblen Balg und zwei an Anschlußteilen, wie Rohre, Gehäuse, Wellen oder dgl. festklemmbaren Halsbereichen, wie sie in DE-A-3 603 119 gezeigt ist.

Derartige Dichtungsmanschetten werden in einem der Montage der Manschetten auf den entsprechenden Anschlussteilen nachfolgenden Arbeitsgang mittels Schellen, Kabeln, Bindedraht oder ähnlichem befestigt. Insbesondere bei aus thermoplastischem Material blasgeformten Dichtungsmanschetten, die eine relativ geringe Wandstärke aufweisen, können bei den herkömmlichen Montagearten im Verbindungsbereich Dichtungsmanschette/Anschlußteil undichte Stellen auftreten. Eine Montage ohne Schellen oder ähnlichen Befestigungselementen ist bei Dichtungsmanschetten aus thermoplastischen Werkstoffen durch das unter Krafteinwirkung auftretende Kaltfließen nicht möglich.

Ziel der Neuerung ist die Beseitigung dieser im Zusammenhang mit Montage und Befestigung von Dichtungsmanschetten eingangs genannter Art auftretenden Nachteile bzw. Probleme.

Gelöst wird die gestellte Aufgabe neuerungsgemäß dadurch, daß auf zumindest einem der Halsbereiche ein gesonderter Spannring aus einem dauerelastischen Kunststoff vormontiert ist.

Somit entfällt bei der Montage der neuerungsgemäßen Dichtungsmanschette ein gesondertes Hantieren mit Schellen oder anderen Befestigungselementen. Die Dichtungsmanschetten werden, durch den vormontierten Spannring unter Vorspannung stehend, auf die entsprechenden Anschlußteile nach üblichen Verfahren, wie Drücken, Ziehen, montiert. Die vom Spannring ausgeübte permanente Vorspannung wirkt sich insbesondere bei aus thermoplastischem Material bestehenden blasgeformten Dichtungsmanschetten günstig aus, da das typische Kaltfließen dieser Werkstoffe ausgeglichen wird und eine auf Jahre hinaus gute Dichtwirkung erzielbar ist.

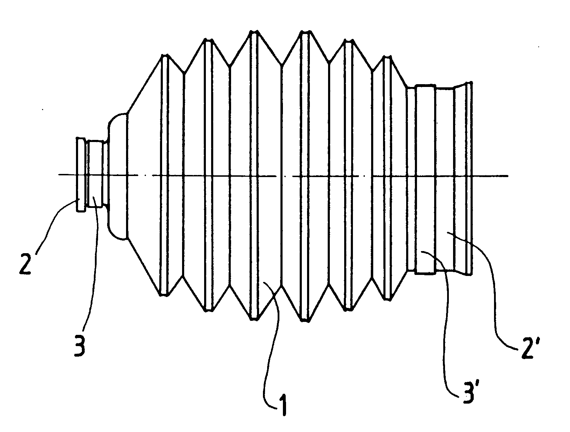

Weitere Merkmale, Vorteile und Einzelheiten der Neuerung werden nun anhand der Zeichnung, die ein Ausführungsbeispiel einer neuerungsgemäßen Dichtungsmanschette darstellt, näher beschrieben. Hierbei ist in der einzigen Zeichnungsfigur eine Dichtungsmanschette in Seitenansicht dargestellt.

Die Dichtungsmanschette wird bevorzugt aus einem thermoplastischen Material oder auch aus Gummi gefertigt und besteht im wesentlichen aus einem Balg 1 und Halsbereichen 2, 2′ zur Befestigung der Dichtungsmanschette auf diversen Anschlußteilen, wie Rohre, Gehäuse, Wellen, Stangen oder dgl..

Jeder Halsbereich 2, 2′ trägt einen Spannring 3,3′ der aus einem dauerelastischen Kunststoff, beispielsweise Polyurethan, besteht. Die als geschlossene Ringe vorgefertigten Spannringe 3,3′ werden vor der Montage der Dichtungsmanschette auf die Halsteile 2, 2′, die sich leicht verformen lassen, gezogen. Die Spannringe rasten am Halsteil 2, 2′, beispielsweise in dort umlaufend ausgebildete flache Nuten ein oder werden durch eine andere geeignete Ausgestaltung der Halsbereiche 2, 2′ in ihrer vormontierten Lage gehalten. Es ist zweckmäßig, wenn die Dichtungsmanschetten bereits mit vormontierten Spannringen geliefert werden. Die durch die Spannringe unter Vorspannung stehenden Dichtungsmanschetten können nach einem der üblichen Verfahren, wie Drücken oder Ziehen, auf die entsprechenden Anschlußteile montiert werden.

Die Spannringe 3,3′ werden bevorzugt farblich auffällig gestaltet, so daß sofort erkennbar ist, ob eine Dichtungsmanschette bereits mit Spannringen versehen ist. Auch läßt sich so eine ordnungsgemäße Montage der Dichtungsmanschette überprüfen. Die Abmessungen der Spannringe und die zugehörige Ausgestaltung der Halsbereiche 2, 2′ erlauben, Montierbarkeit und Anpreßkraft der Dichtungsmanschetten in einem weiten Bereich zu variieren. Durch die Auswahl des Spannring-Werkstoffes kann ebenfalls Einfluß auf den erforderlichen bzw. gewünschten Anpreßdruck genommen bzw. es können auch Anforderungen hinsichtlich anderer Eigenschaften, wie Ölbeständigkeit, erfüllt werden.

## Patentansprüche

1. Dichtungsmanschette aus einem thermoplastischen Kunststoff oder aus Gummi mit einem flexiblen Balg und zwei an Anschlußteilen, wie Rohre, Gehäuse, Wellen oder dgl. festklemmbaren Halsbereichen, dadurch gekennzeichnet, daß auf zumindest einem der Halsbereiche (2, 2′) ein gesonderter Spannring (3,3′) aus einem dauerelastischen Kunststoff vormontiert ist.

2. Dichtungsmanschette nach Anspruch 1, dadurch gekennzeichnet, daß der Spannring (3,3′) aus Polyurethan gefertigt ist.

3. Dichtungsmanschette nach Anspruch 1 oder 2, dadurch gekennzeichnet, daß der Spannring (3,3′) farblich auffällig gestaltet ist.

4. Dichtungsmanschette nach einem der Ansprüche 1 bis 3, dadurch gekennzeichnet, daß der Spannring (3,3′) am Halsbereich (2, 2′) in einer dort ausgebildeten umlaufenden Nut oder dgl. gehalten ist.

## Claims

1. Sealing collar formed from a thermoplastic plastics material or from rubber, having a flexible bellows and two neck regions, which are securely clampable to connection-pieces, such as pipes, housings, shafts or the like, characterised in that a separate tensioning ring (3, 3'), formed from a permanently resilient plastics material, is pre-assembled on at least one of the neck regions (2, 2').

2. Sealing collar according to claim 1, characterised in that the tensioning ring (3, 3') is made of polyurethane.

3. Sealing collar according to claim 1 or 2, characterised in that the tensioning ring (3, 3') is conspicuously coloured.

4. Sealing collar according to one of claims 1 to 3, characterised in that the tensioning ring (3, 3') is retained on the neck region (2, 2') in a circumferential groove or the like provided there.

## Revendications

1. Soufflet d'étanchéité fait d'une matière synthétique thermoplastique ou de caoutchouc, comprenant un soufflet flexible et deux régions de collet qui peuvent être fixées par serrage sur des éléments de raccordement tels que des tubes, boîtiers, arbres ou équivalents, caractérisé en ce qu'une bague de serrage distincte (3, 3') faite d'une matière durablement élastique est montée à l'avance sur au moins l'une des régions de collet (2, 2').

2. Soufflet d'étanchéité selon la revendication 1, caractérisé en ce que la bague de serrage (3, 3') est fabriquée en polyuréthane.

3. Soufflet d'étanchéité selon la revendication 1 ou 2, caractérisé en ce que la bague de serrage (3, 3') rendue visible par coloration.

4. Soufflet d'étanchéité selon une des revendications 1 à 3, caractérisé en ce que la bague de serrage (3, 3') est retenue sur une région de collet (2, 2') dans une gorge ou équivalent qui est formée circonférentiellement à cet endroit.
